# EUROPEAN PATENT APPLICATION

(11) **EP 4 765 573 A1**
(43) Date of publication of application: **24.06.2026**
(21) Application number: 25222302.9
(22) Date of filing: 10.12.2025
(51) Int. Cl.: H02J 7/42, H02J 7/00, H02J 7/80, H02J 7/45

(54) **APPARATUS AND METHOD FOR DATA REPLACEMENT IN A BATTERY SYSTEM**

(30) Priority: 12.12.2024 KR 20240185056
(71) Applicant: SAMSUNG SDI CO., LTD., Yongin-si, Gyeonggi-do 17084 (KR)
(72) Inventor: KIM, Yeonju, 17084 Yongin-si (KR)
(74) Representative: Maiwald GmbH

(57) **Abstract**

An apparatus and method for data replacement in a battery system may be provided. The method includes: establishing a connection with a user device; providing a graphical user interface (GUI) to the user device; receiving, via the GUI, a first command for data stored for a battery rack comprising a battery and a battery control unit (BCU); identifying a target component to be replaced based on the first command, wherein the target component is one of the battery or the BCU; restoring the data according to the first command; and initializing a part of the restored data according to the target component.

## Description

### BACKGROUND

### 1. Field

This disclosure relates to an apparatus and method for data replacement in a battery system.

### 2. Description of the Related Art

An energy storage system (ESS) is a system that stores produced electric energy in a battery system and then allows it to be used when needed.

If the protection circuit that controls relays, etc. through self-diagnosis in the battery system can no longer operate due to certain reasons, a battery control unit (BCU) may be replaced. If there is no operational information such as accumulated information on abnormal cell detection, life-related history information, and protection operation records after the replacement of the BCU, there may be problems in operating the ESS in the future. For example, if the BCU is replaced without replacing the battery cells, it may be difficult to track the abnormal cell because there may be no information about the abnormal cell.

### SUMMARY

At least one of the embodiments of the present disclosure provides an apparatus and method for data replacement in a battery system configured to provide information (e.g., critical operational information) when replacing a BCU.

According to one embodiment, a method (e.g., for data replacement) may be provided. The method includes: establishing a connection with a user device; providing a graphical user interface (GUI) to the user device; receiving, via the GUI, a first command for data stored for a battery rack comprising a battery and a battery control unit (BCU); identifying a target component to be replaced based on the first command, wherein the target component is one of the battery or the BCU; restoring the data according to the first command; and initializing a part of the restored data according to the replacement target.

The initializing may include initializing a portion of the restored data related to the battery .

The initializing may include initializing a portion of the restored data related to the BCU based on identifying the BCU as the target component.

The BCU may include a battery management system configured to monitor status of the battery and control status of the battery; at least one protection circuit configured to protect the battery; and a memory configured to store the data for the battery rack.

The method may further include receiving a second command for the battery rack from the user device through the GUI; and storing, based on the second command, the data for the battery rack stored in a memory of the BCU to a location specified by the user device.

The user device and the BCU of the battery rack may be connected through a controller area network (CAN) communication line.

According to some embodiments, an apparatus may be provided. The apparatus includes: a graphical user interface (GUI) system configured to provide a GUI to the user device; and a controller configured to: receive, via the GUI, a first command for data stored for a battery rack comprising a battery and a battery control unit (BCU); identify a target component to be replaced based on the first command, wherein the target component is one of the battery or the BCU; restore the data according to the first command, and initialize a part of the restored data according to the target component.

The BCU may include a battery management system configured to monitor status of the battery and control status of the battery; at least one protection circuit configured to protect the battery; and a memory configured to store data of the battery rack, the data of the battery rack may include data related to the battery and data related to the BCU.

The controller may be configured to initialize the first data related to the battery based on identifying the battery as the target component, and initialize the second data related to the BCU based on identifying the BCU as the target component.

The controller may be configured to receive a second command for the battery rack from the user device through the GUI; store, based on the second command, the data for the battery rack stored in the memory, at a location specified by the user device.

The user device and the BCU of the battery rack may be connected through a controller area network (CAN) communication line.

### BRIEF DESCRIPTION OF THE DRAWINGS

FIG. 1 is a block diagram of an energy storage system according to an embodiment.
FIG. 2 is a block diagram an example battery system according to an embodiment.
FIG. 3 is a block diagram of a data replacement apparatus according to an embodiment.
FIG. 4 is an example GUI screen provided by the GUI provider of FIG. 3.
FIG. 5 is a flowchart of a process for a data replacement method according to one embodiment.
FIG. 6 is an example GUI screen of a user device requesting a backup command.
FIG. 7 is another flowchart of a data replacement method according to one embodiment.
FIG. 8 is an example GUI screen of a user device requesting a restore command.
FIG. 9 is another example GUI screen of a user device requesting a restore command.

### DETAILED DESCRIPTION

Example embodiments will now be described more fully hereinafter with reference to the accompanying drawings. As a person of skill in the art should recognize, the described embodiments may be embodied in different forms and should not be construed as limited to the embodiments set forth herein. Rather, these embodiments are provided so that this disclosure will be thorough and complete, and will fully convey exemplary implementations to those skilled in the art. Thus, the drawings and description are to be regarded as illustrative in nature and not restrictive. Like reference numerals designate like elements throughout the specification. In the flowchart described with reference to the drawings in this specification, the order of operations may be changed, several operations may be merged, some operations may be divided, and specific operations may not be performed.

Throughout the specification and claims, if a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, if a component is referred to be "connected" with another component, it includes not only the case where two components are "directly connected" but also the case where two components are "indirectly or non-contactedly connected" with another component interposed therebetween, or the case where two components are "electrically connected." On the other hand, if an element is referred to as "directly connected" to another element, it should be understood that no other element exists in the middle.

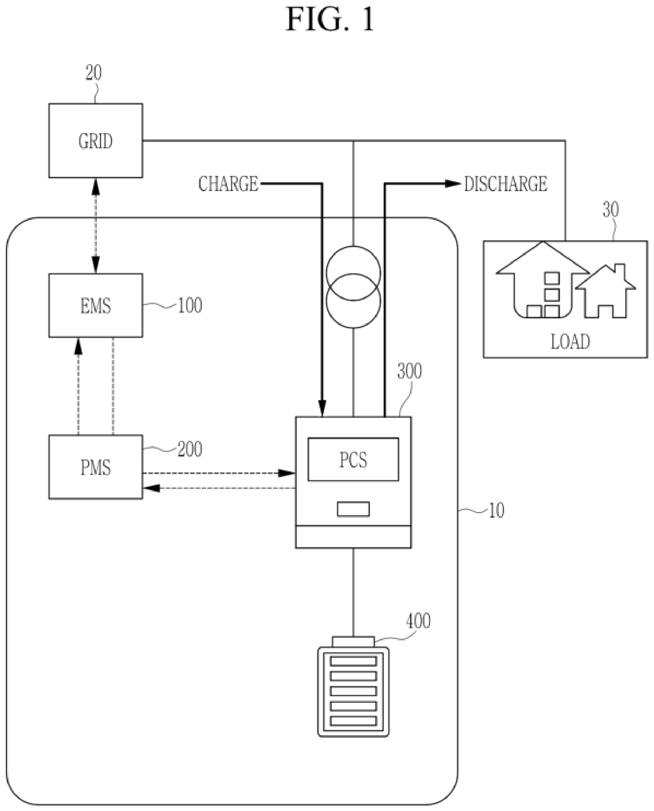

FIG. 1 is a block diagram of an energy storage system according to an embodiment.

Referring to FIG. 1, the energy storage system 10 may store power produced in a grid 20 or power generation system, and supply the stored power to a load 30 or provide surplus power to the grid 20.

The grid 20 may include a power plant, a substation, a transmission station, and/or the like. In a normal state, the grid 20 supplies power to the energy storage system 10 to operate the load 30 and may receive power produced from the power generation system. The power generation system may produce power using energy sources. The power generation system may provide the produced power to the energy storage system 10. The power generation system may be a solar power generation system, a wind power generation system, a tidal power generation system, and/or the like, but is not limited to the types of power generation systems described above.

The load 30 may consume power supplied from the energy storage system 10. For example, the load 30 may take the form of one or more electrical facilities installed in factories or homes.

The energy storage system 10 may include an energy management system (EMS) 100, a power management system (PMS) 200, a power conversion system (PCS) 300, and a battery system 400.

Information between the battery system 400, PMS 200, and PCS 300 may be transmitted and received through a data communications network including, for example, a controller area network (CAN), Ethernet, and/or the like.

The battery system 400 may be charged by receiving power from the grid 20 or the power generation system, and may be discharged to supply power to the load 30 or the grid 20.

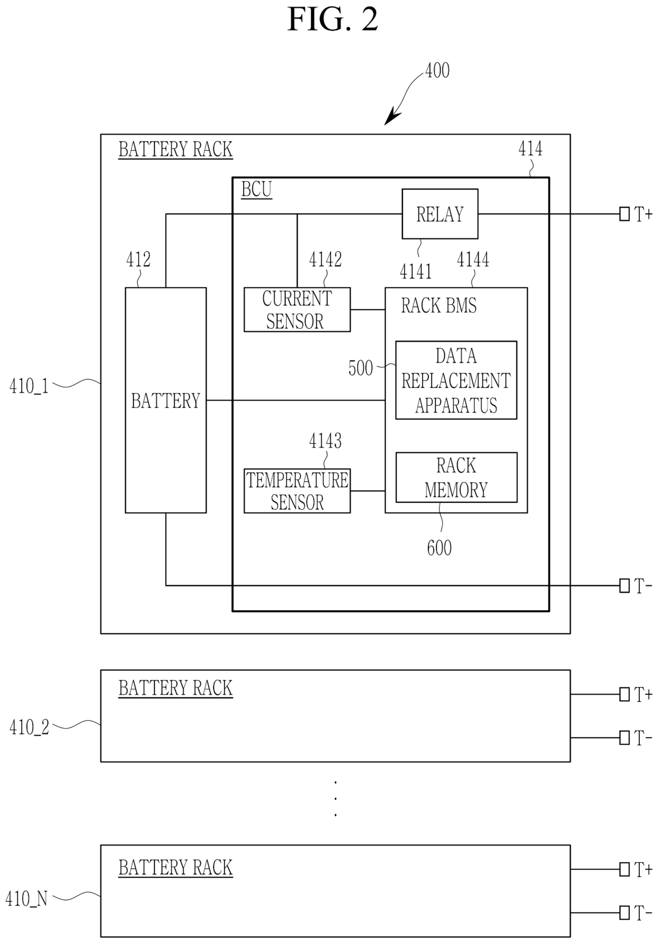

FIG. 2 is a block diagram of an example battery system according to an embodiment.

Referring to FIG. 2, the battery system 400 may include a plurality of battery racks 410_1 to 410_N. The battery racks 410_1 to 410_N may be called battery packs depending on the system used.

The battery racks 410_1 to 410_N may be connected to the PCS 300 through terminals T+ and T-. A switch may be connected between the terminal T+ and the PCS 300. A switch may be connected between the terminal T- and the PCS 300.

One or more (e.g., each) of the battery racks 410_1 to 410_N may include a battery 412, a battery control unit (BCU) 414, and a rack memory 600.

The battery 412 may include one or more battery cells electrically connected to each other in series and/or in parallel. The battery cell may be composed of a cathode, an anode, a separator, and an electrolyte. A battery module may be formed by combining a selected number of battery cells.

The battery 412 may include at least one battery module.

The BCU 414 may include a relay 4141, a current sensor 4142, a temperature sensor 4143, and a rack battery management system (BMS) 4144.

The relay 4141 may control current paths during charging and discharging of the battery 412. Closing and opening of the relay 4141 may be controlled according to a control signal provided from the rack BMS 4144.

The current sensor 4142 may measure a current flowing to the battery 412.

The temperature sensor 4143 may measure a temperature of the battery 412.

The rack BMS 4144 may monitor overall status of the battery 412 and the battery cells included in the battery 412, and/or perform various control functions to adjust the status of the battery 412 and the battery cells included in the battery 412.

The rack BMS 4144 may monitor voltages and current of the battery 412, control charging and discharging of the battery 412, perform cell balancing operations, monitor the temperature of the battery 412 measured by the temperature sensor 4143, and/or control the temperature of the battery 412 by cooling, ventilating, changing the charging speed and/or the like as necessary.

The rack BMS 4144 may predict a life of the battery 412, diagnose an abnormal state of the battery 412, and/or perform a protective action to protect the battery 412 based on the status data of the battery 412 and the battery cells included in the battery 412. For example, the rack BMS 4144 may cut off a connection between the battery 412 and the load through the relay 4141 based on the status data of the battery 412 and the battery cells included in the battery 412. For example, the rack BMS 4144 may protect the battery 412 by controlling the charge current and discharge current of the battery 412 based on the status data of the battery 412 and the battery cells included in the battery 412.

According to some embodiments, the rack BMS 4144 may include one or more circuits for protecting and managing the battery, such as a voltage detection circuit for detecting voltages of battery cells included in the battery 412, a current detection circuit for detecting a current measured by the current sensor 4142, a relay control circuit for controlling the relay 4141, a relay welding detection circuit for detecting welding of the relay, and a short circuit detection circuit for detecting an internal short circuit of the battery cells, for a protective operation of the battery 412.

The rack BMS 4144 may store status data of the battery 412 and the battery cells included in the battery 412 in the rack memory 600. The rack BMS 4144 may store status data of the battery 412 and battery cells included in the battery 412 in the form of a file. For example, the file may be a file with an extension .xml.

The rack BMS 4144 may predict the life of components involved in the operation of the battery system 400, such as the relay 4141, the current sensor 4142, and the temperature sensor 4143, and may diagnose operation status of abnormal components. For example, the rack BMS 4144 may diagnose a welding of the relay 4141, a failure of the current sensor 4142, and a failure of the temperature sensor (4143).

The rack BMS 4144 may store component data related to components included in the BCU 414, such as the relay 4141, the current sensor 4142, the temperature sensor 4143, and circuits involved in the protection operation of the battery 412 within the rack BMS 4144, in the rack memory 600. In some embodiments, component data may include status data of components included in the BCU, diagnostic data of the components, operation data of the components, and/or the like. For example, the rack BMS 4144 may store the number of operations or life information of the relay 4141 in the rack memory 600. For example, the rack BMS 4144 may store operating time information of each component that may be used to predict the life of each component in the rack memory 600. For example, the rack BMS 4144 may store information used to predict a failure of each component in the rack memory 600. For example, the rack BMS 4144 may record protection operation occurrence information of circuits involved in the protection operation. For example, the rack BMS 4144 may store wire sensing information for each battery module, model number information for each battery module, and/or the like in the rack memory 600.

For convenience, the data of components included in BCU 414 will be referred to as BCU data.

The rack memory 600 may store information related to a corresponding battery rack, e.g., 410_1. In FIG. 2, for convenience, the rack memory 600 is described as corresponding to a battery rack 410_1.

The rack memory 600 may store BCU data of the corresponding battery rack 410_1 and battery data related to the battery 412 and battery cells included in the battery 412. The rack memory 600 may store BCU data and battery data of the corresponding battery rack 410_1 as a file in xml format.

In some embodiments, the rack memory 600 may include a first area and a second area. The battery data may be stored in the first area of the rack memory 600. The BCU data may be stored in the second area of the rack memory 600.

The rack memory 600 may include electrically erasable programmable read only memory (EEPROM).

According to an embodiment, the rack BMS 4144 may include a data switch or replacement apparatus 500 that provides data switch or replacement functionality through a provided graphical user interface (GUI).

The data replacement apparatus 500 provides a GUI to the user, so that the user may access the rack memory 600 according to a command through the GUI, and initialize data stored in the rack memory 600 or back-up (e.g., store a copy of) data stored in the rack memory 600. The data replacement apparatus 500 may restore backed-up data to the rack memory 600 according to a command through the GUI.

The user may install a data switch or replacement program on a user device and connect to a data replacement apparatus 500 by executing the data replacement program.

According to an embodiment, the data replacement apparatus 500 may back-up data stored in the rack memory 600 as needed, and may distinguish data to be initialized and data to be restored depending on a target device that is being replaced (e.g., the battery 412 or the BCU 414).

The data replacement apparatus 500 may restore backed-up data if the battery 412 is replaced. The data replacement apparatus 500 may also initialize the battery data.

The data replacement apparatus 500 may restore backed-up data if the BCU 414 is replaced. The data replacement apparatus 500 may also initialize the BCU data.

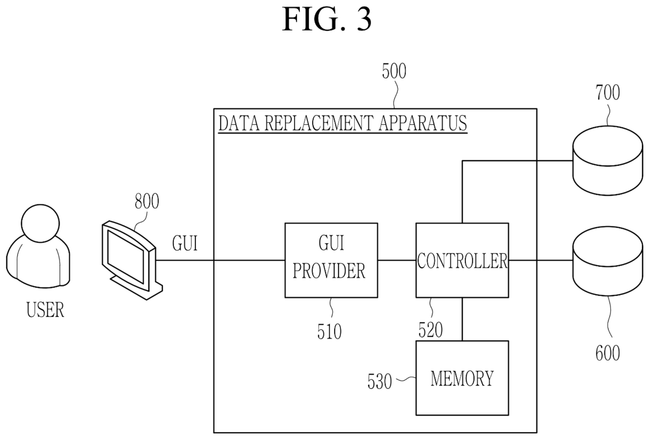

FIG. 3 is a block diagram of a data replacement apparatus according to an embodiment.

Referring to FIG. 3, the data replacement apparatus 500 may include a GUI provider or system 510, a controller 520, and a memory 530.

The controller 520 may control operations according to the execution of the data replacement program. The controller 520 may be implemented in various types such as an application processor (AP), a central processing unit (CPU), a graphic processing unit (GPU), and/or the like, and may be any semiconductor device that executes commands stored in the memory 530. The controller 520 may perform data switch or replacement functions and operations by executing program commands stored in the memory 530. The data switch or replacement functions may include data backup functions or data restoration functions.

The controller 520 may establish a connection with the user device 800 according to a connection request from the user device 800 that has executed the data replacement program, and control the GUI provider 510. The user device 800 and the data replacement apparatus 500 may be connected via a controller area network (CAN) communication line.

The GUI provider 510 may provide the GUI to the user device 800 under the control of the controller 520. The GUI provider may include a mechanism (e.g., a processor that executes program instructions) for displaying a screen on a display device of the user device so that commands may be input using an input device such as a mouse or keyboard.

The controller 520 may receive a backup command (e.g., a second command) from the user device 800 through the GUI and back-up (or write or store) data stored in the rack memory 600 according to the backup command, to a target location. The target location may be, for example, an external storage device 700 such as a USB.

The controller 520 may receive a restore command (e.g., a first command) from the user device 800 through the GUI and restore (e.g., retrieve or load) the backed-up data according to the restore command. If the controller 520 recognizes, identifies, or detects replacement of the battery 412 as the target component to be replaced through the restore command, it may initialize the battery data when restoring the backed-up data. If the controller 520 recognizes, identifies or detects replacement of the BCU 414 as the target component to be replaced through the restore command, it may initialize the BCU data when restoring the backed-up data.

The controller 520 may output a status message during a backup process according to the backup command through the GUI. For example, the controller 520 may output a backup completion message if the backup is successfully completed or output an error message if an error occurs.

The controller 520 may output a status message upon restoration of the backed-up data according to a restore command via the GUI. For example, the controller 520 may output a restore completion message if restoration is successfully completed or an error message if an error occurs.

In some embodiments, the controller 520 may provide information to notify or recommend replacement of the battery 412 or BCU 414 to the user device 800. For example, the diagnosis results of the battery 412 in a rack BMS 4144 in FIG. 2 or the component diagnosis results of a BCU 414 may be provided to the user device 800.

In some embodiments, the user device 800 may identify the battery 412 or BCU 414 to be replaced (e.g., based on the received diagnosis results), and transmit a data backup request based on identifying the replacement of the battery 412 or BCU 414 to the data replacement apparatus 500 through the GUI.

The memory 530 may include commands executed in a data replacement program and data for executing commands.

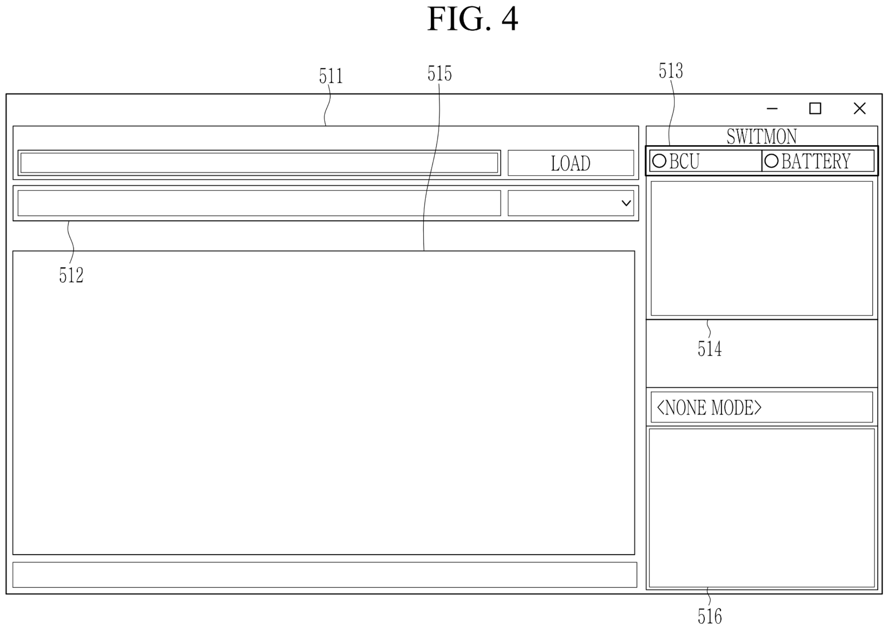

FIG. 4 is an example GUI screen provided by the GUI provider of FIG. 3.

Referring to FIG. 4, if a data replacement program is installed in the user device 800, a GUI screen as shown in FIG. 4 may be displayed on the user device 800.

The GUI screen may provide an item or area 511 to select a data file to be backed up. The user device 800 may select data to be loaded through the item 511. The data to be loaded may be in the format of an XML file or a backup file. The rack memory 600 may store BCU data and battery data related to the battery rack 410_1 in the form of an xml file. The backed-up data may be stored in an external storage device 700 in the format of a backup file. In this regard, the external storage device 700 may store a copy of the BCU data and battery data that is stored in the rack memory 600 in response to the user command.

The GUI screen may provide an item or area 512 that allows selection of the battery rack storing the data to be backed up. The user device 800 may set or enter an identifier for the battery rack through the item 512.

The GUI screen may provide an item or area 513 that allows selection of a replacement target (or target component to be replaced) when restoring data, depending on the data replacement. The user device 800 may select whether data restoration is due to replacement of the BCU 414 or replacement of the battery 412 through the item 513.

The GUI screen may provide a data replacement operation option 514 based on a file extension of the data loaded through the item 511. If the data loaded through item 511 is in the format of an xml file, the replacement operation is determined as a backup operation, and the data replacement operation option 514 may provide a read mode. If the data loaded through item 511 is in the format of a backup file, the replacement operation is determined as a restore operation, and the data replacement operation option 514 may provide a write mode. The user device 800 mat select read mode or write mode through the data replacement operation option 514.

The GUI screen may provide a viewer 515. The viewer 515 may display backed-up or restored data in read mode or write mode.

In some embodiments, the GUI screen may provide a detailed information item 516. The detailed information item 516 may display information such as error conditions, the order in which each data replacement operation mode should proceed, and the location where the file is stored. In some embodiments, if the user device 800 selects the detailed information item 516 twice in succession, the information displayed in the detailed information item 516 may be deleted.

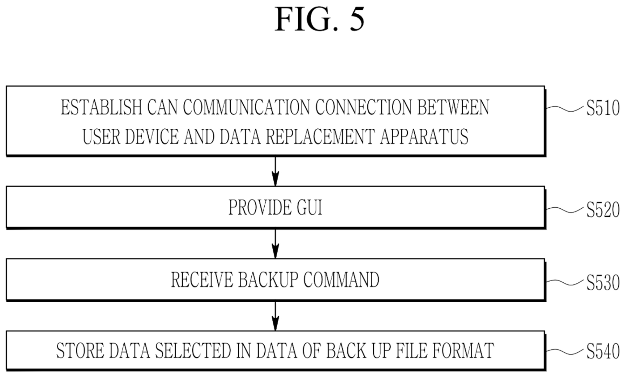

FIG. 5 is a flowchart of a process for a data replacement method according to one embodiment.

Referring to FIG. 5, the user device 800 may establish a CAN communication connection with the data replacement apparatus 500 of a battery rack containing data to be backed-up(S510), and the data replacement apparatus 500 of the corresponding battery rack may provide a GUI to the user device 800 (S520).

The data replacement apparatus 500 may receive a backup command from the user device 800 through the GUI (S530).

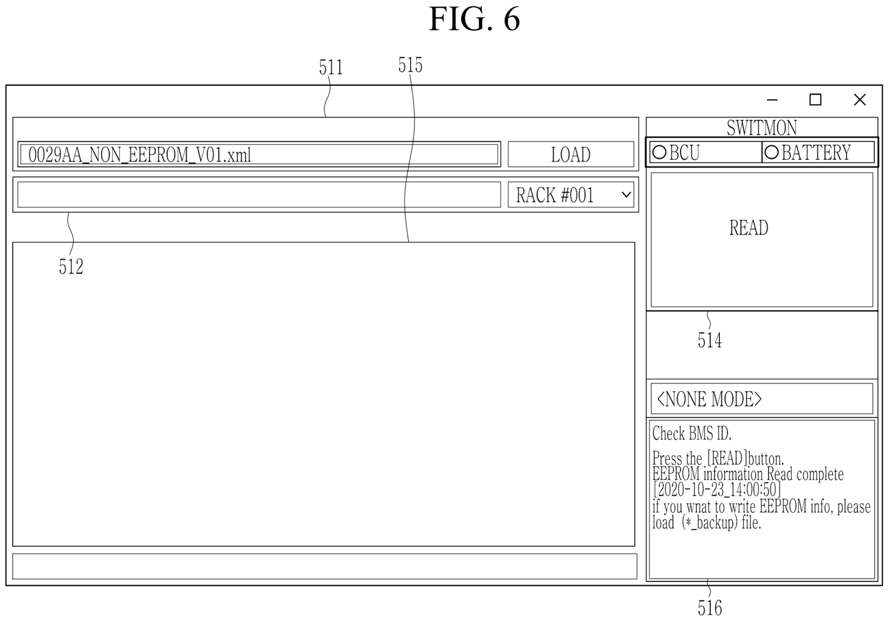

FIG. 6 is an example GUI screen of a user device requesting a backup command.

Referring to FIG. 6, the user device 800 may select data to be loaded through an item 511 in the GUI. As an example, the user device 800 may select data in the file "0029AA_NON_EEPROMMV01.xml". Based on the selection of data in XML format, the data replacement operation option 514 may provide a read mode. In some embodiments, the progress order according to the reading mode may be provided through the detailed information item 516.

The user device 800 may set an identifier (e.g., RACK #001) of the battery rack to which the data replacement operation is applied through item 513.

In some embodiments, the user device 800 may select the read mode of the data replacement operation option 514 and select a location to store the data to be loaded.

Again, referring to FIG. 5, the data replacement apparatus 500 may store data selected by the user device 800 at a location selected by the user device 800 (S540). The data replacement apparatus 500 may store data selected by the user device 800 in data of a format of a backup file. In some embodiments, the data replacement apparatus 500 may display the data of the backup file through the viewer 515 in the GUI, and may store the contents of the viewer 515 together in the format of a CSV file at a location selected by the user device 800.

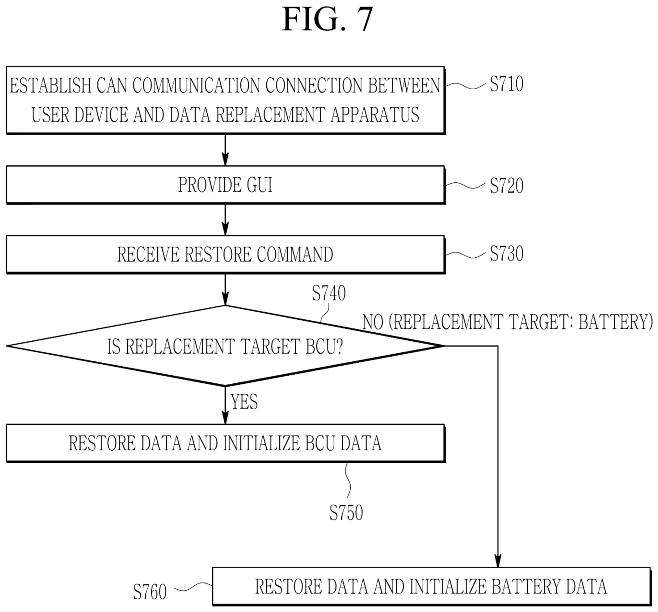

FIG. 7 is another flowchart of a data replacement method according to one embodiment.

Referring to FIG. 7, a user device 800 may establish a CAN communication connection with a data replacement apparatus 500 of a battery rack to be data replaced (S710), and the data replacement apparatus 500 of the corresponding battery rack may provide a GUI to the user device 800 (S720).

The data replacement apparatus 500 may receive a restore command from the user device 800 through the GUI (S730).

The data replacement apparatus 500 may identify a target component to be replaced based on the restore command.

If the data replacement apparatus 500 detects that the restore command is for replacement of the BCU 414 (S740), it may restore the backed-up data to the rack memory and initialize the BCU data (S750). In some embodiments, the data replacement apparatus 500 may restore (e.g., only restore) the battery data. In this regard, the data replacement apparatus 500 may identify the battery data identified as such from the external storage device 700.

In some embodiments, if the data replacement apparatus 500 detects that the restore command is for replacement of the battery 412 (S740), it may restore the backed-up data to the rack memory and initialize the battery data (S760). In some embodiments, the data replacement apparatus 500 may restore (e.g., only restore) the BCU data. In this regard, the data replacement apparatus 500 may identify the BCU data identified as such from the external storage device 700.

The data replacement apparatus 500 may display data of a backup file through a viewer 515 in the GUI.

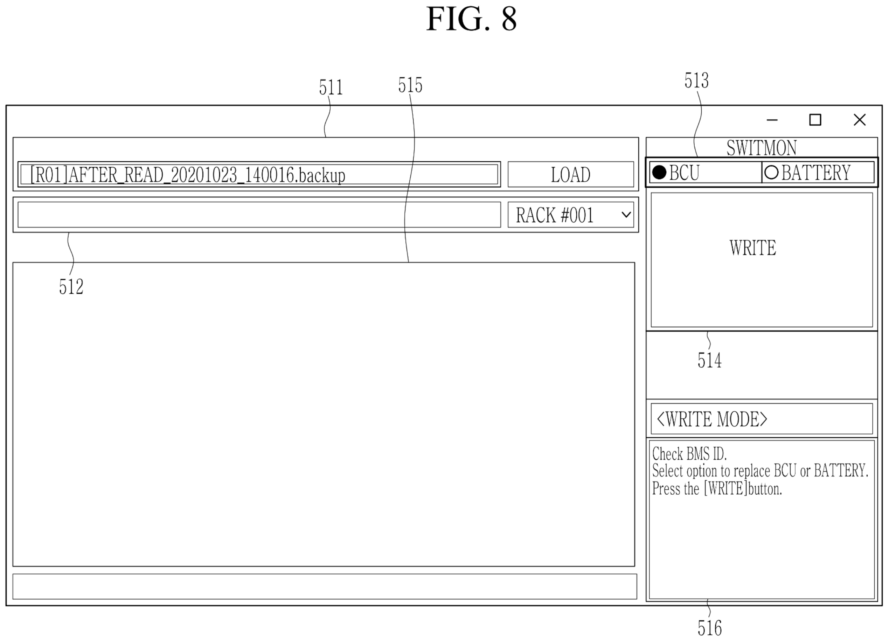

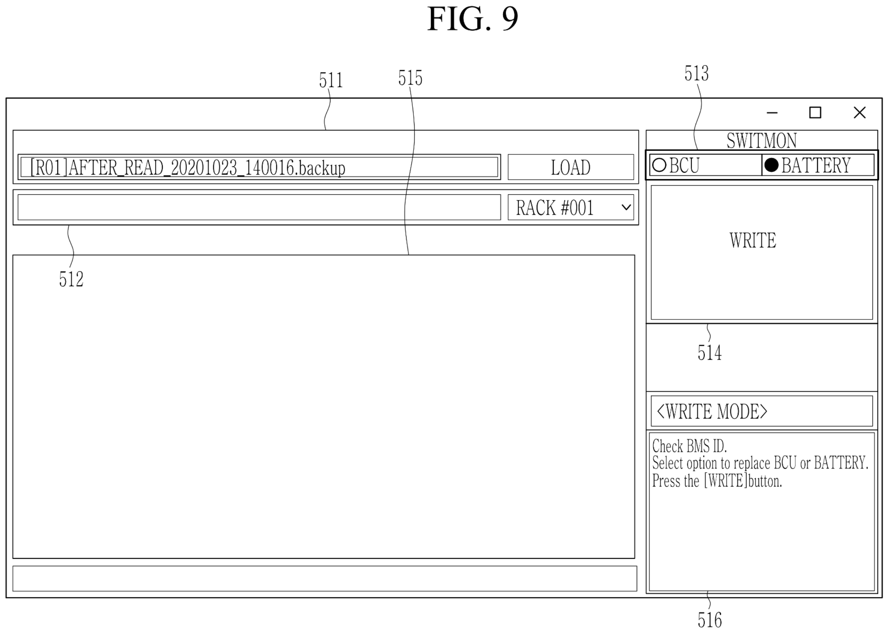

FIGS. 8 and 9 are diagrams each showing an example of a user device requesting a restore command through a GUI screen.

Referring to FIGS. 8 and 9, the user device 800 may select data to be loaded through an item 511 in the GUI. As an example, the user device 800 may select data in the file "[R01] AFTER_READ_20201023_140016.backup". Based on the data selection of a file in the format of backup, the data replacement operation option 514 may provide a write mode. In some embodiments, the progress order according to the writing mode may be provided through the detailed information item 516.

The user device 800 may set or enter an identifier (e.g., RACK #001) of the battery rack to which the data replacement operation is applied through item 513.

The user device 800 may select a target component to be replaced, through item 512 that is activated according to the data selection of the backup file. If the BCU 414 is to be replaced, the user device 800 may select the BCU from item 512, as shown in FIG. 8. If the battery 412 is to be replaced, the user device 800 may select the battery from item 512, as shown in FIG. 9.

After selecting the target component to be replaced, the user device 800 may select a write mode of the data replacement operation option 514.

In some embodiments, a restore command according to replacement of the BCU 414 or a restore command according to replacement of the battery 412 may be transmitted to the data replacement apparatus 500.

At least some of the battery replacement method described above may be implemented as a program or software running on a computing device, and the program or software may be stored on a computer-readable medium. In some embodiments, at least some of the battery replacement method according to the embodiments may be implemented as hardware that may be electrically connected to a computing device.

According to at least one embodiment, by backing up operational data before replacement of the battery or the BCM, and restoring the backed-up operational information after replacement, may help reduce operational problems that may occur when the battery control device is replaced.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

### Description of Symbols

100: Energy management system
200: Power management system
300: Power conversion system
400: Battery system
410_1~410_N: Battery rack
412: Battery
414: Battery control device
416: Rack memory
500: Data replacement apparatus
510: GUI provider
520: Controller
530: Memory

## Claims

1. A method comprising:
establishing a connection with a user device (800);
providing a graphical user interface, GUI, to the user device (800);
receiving, via the GUI, a first command for data stored for a battery rack (410) comprising a battery (412) and a battery control unit, BCU(414);
identifying a target component to be replaced based on the first command, wherein the target component is one of the battery (412) or the BCU (414);
restoring the data according to the first command; and
initializing a part of the restored data according to the target component.

2. The method as claimed in claim 1, wherein the initializing comprises initializing a portion of the restored data related to the battery (412) based on identifying the battery (412) as the target component.

3. The method as claimed in claim 1, wherein the initializing comprises initializing a portion of the restored data related to the BCU (414) based on identifying the BCU (414) as the target component.

4. The method as claimed in claim 3, wherein the BCU (414) comprises:
a battery management system configured to monitor status of the battery (412) and control status of the battery (412);
at least one protection circuit configured to protect the battery (412); and
a memory (530) configured to store the data for the battery rack (410).

5. The method as claimed in any one of the preceding claims further comprising:
receiving a second command for the battery rack (410) from the user device (800) through the GUI; and
storing, based on the second command, the data for the battery rack (410) stored in a memory (530) of the BCU (414) to a location specified by the user device (800).

6. The method as claimed in any one of the preceding claims, wherein the user device (800) and the BCU (414) of the battery rack (410) are connected through a controller area network, CAN, communication line.

7. An apparatus (500) comprising:
a graphical user interface, GUI, system configured to provide a GUI to a user device (800); and
a controller (520) configured to:
receive, via the GUI, a first command for data stored for a battery rack (410) comprising a battery (412) and a battery control unit, BCU (414);
identify a target component to be replaced based on the first command, wherein the target component is one of the battery (412) or the BCU (414);
restore the data according to the first command; and
initialize a part of the restored data according to the target component.

8. The apparatus (500) as claimed in claim 7, wherein the BCU (414) comprises:
a battery management system configured to monitor status of the battery (412) and control status of the battery (412);
at least one protection circuit configured to protect the battery (412); and
a memory (530) configured to store the data for the battery rack (410), wherein the data for the battery rack (410) comprises first data related to the battery (412) and second data related to the BCU (414).

9. The apparatus (500) as claimed in claim 8, wherein the controller (520) is configured to initialize the first data related to the battery (412) based on identifying the battery (412) as the target component, and initialize the second data related to the BCU (414) based on identifying the BCU (414) as the target component.

10. The apparatus (500) as claimed in claim 8, wherein the controller (520) is configured to:
receive a second command for the battery rack (410) from the user device (800) through the GUI;
store, based on the second command, the data for the battery rack (410) stored in the memory (530), at a location specified by the user device (800).

11. The apparatus (500) as claimed in any one of the claims 7 to 10, wherein the user device (800) and the BCU (414) of the battery rack (410) are connected through a controller area network, CAN, communication line.
